# EUROPEAN PATENT APPLICATION

(11) **EP 4 575 595 A1**
(43) Date of publication of application: **25.06.2025**
(21) Application number: 24194892.6
(22) Date of filing: 16.08.2024
(51) Int. Cl.: G02B 5/30, G02B 5/32, G02B 27/01, G02B 27/42, G02B 27/28

(54) **REFLECTIVE POLARIZATION VOLUME HOLOGRAM LAYER IN AUGMENTED REALITY / VIRTUAL REALITY OPTICAL ASSEMBLY**

(30) Priority: 21.12.2023 US 202318392749
(71) Applicant: Meta Platforms Technologies, LLC, Menlo Park, CA 94025 (US)
(72) Inventor: Li, Zhenye, Menlo Park, 94025 (US); Cheng, Hsien-Hui, Menlo Park, 94025 (US); Miller, Sawyer, Menlo Park, 94025 (US); Zhao, Yang, Menlo Park, 94025 (US); Zhang, Yanqi, Menlo Park, 94025 (US); Lu, Lu, Menlo Park, 94025 (US)
(74) Representative: Murgitroyd & Company

(57) **Abstract**

A reflective polarization volume hologram (rPVH) layer in combination with a quarter wave plate (QWP) is used to provide optical power and to correct chromatic aberration in an optical assembly of an augmented and/or virtual reality (AR/VR) near-eye display device. The rPVH layer introduces more degrees of freedom to further improve contrast of the optical system and reduces a thickness/weight of the optical assembly. The rPVH layer is flexible, thus, allowing curved lamination on an optical lens. Moreover, the rPVH layer is sensitive to circular polarization. Thus, it can filter right-handed circular polarization (RHCP) or left-handed circular polarization (LHCP), without a need for the QWP.

## Description

### TECHNICAL FIELD

This disclosure relates generally to augmented and/or virtual reality (AR/VR) display devices, and in particular, to providing higher optical power and higher order of aberration correction through a reflective polarization volume hologram (rPVH) layer in an optical assembly.

### BACKGROUND

With recent advances in technology, prevalence and proliferation of content creation and delivery has increased greatly in recent years. In particular, interactive content such as virtual reality (VR) content, augmented reality (AR) content, mixed reality (MR) content, and content within and associated with a real and/or virtual environment (e.g., a "metaverse") has become appealing to consumers.

To facilitate delivery of this and other related content, service providers have endeavored to provide various forms of wearable display systems. One such example may be a head-mounted display (HMD) device, such as a wearable eyewear, a wearable headset, or eyeglasses. In some examples, the head-mounted display (HMD) device may project or direct light to may display virtual objects or combine images of real objects with virtual objects, as in virtual reality (VR), augmented reality (AR), or mixed reality (MR) applications. For example, in an AR system, a user may view both images of virtual objects (e.g., computer-generated images (CGIs)) and the surrounding environment. Head-mounted display (HMD) devices may also present interactive content, where a user's (wearer's) gaze may be used as input for the interactive content.

### SUMMARY

According to a first aspect, there is provided an optical assembly for an augmented reality/virtual reality (AR/VR) display system, the optical assembly comprising: a reflective polarization volume hologram (rPVH) layer; a quarter wave plate (QWP) layer; and one or more optical elements, wherein the rPVH layer and the QWP layer are flexible and applied onto one of the one or more optical elements to provide optical power and to correct aberration in the optical assembly.

In some embodiments, the rPVH layer and the QWP layer are to correct chromatic aberration without introducing negative optical power.

In some embodiments, the rPVH layer introduces more degrees of freedom for bending the light compared to a reflective polarizer and QWP combination to correct monochromatic aberration.

In some embodiments, the rPVH layer is sensitive to circular polarization to filter right-handed circular polarization (RHCP) or left-handed circular polarization (LHCP).

In some embodiments, the rPVH layer and the QWP layer are applied onto a positive optical power optical lens through curved lamination.

In some embodiments, the rPVH layer and the QWP layer are applied onto a negative optical power optical lens through curved lamination.

In some embodiments, the rPVH layer comprises liquid crystals (LCs) aligned in a helical twist with a helix axis vertical to a substrate.

In some embodiments, an in-plane periodicity of the rPVH layer is denoted as Λx, and a vertical periodicity of the rPVH layer is denoted as Λy with a helical pitch of the rPVH layer being P = 2Λy.

In some embodiments, the one or more optical elements of the optical assembly comprise at least one of an optical lens, a filter, or a diffractive optical element (DOE).

According to a second aspect, there is provided an augmented reality/virtual reality (AR/VR) near-eye display device comprising: a light source; an optical assembly comprising: a reflective polarization volume hologram (rPVH) layer; a quarter wave plate (QWP) layer; and one or more optical elements, wherein the rPVH layer and the QWP layer are flexible and applied onto one of the one or more optical elements to provide optical power and to correct aberration in the optical assembly; and a display to project light into an eyebox.

In some embodiments, the light source comprises a coherent light source or an incoherent light source.

In some embodiments, the rPVH layer and the QWP layer are: to correct chromatic aberration without introducing negative optical power; and to correct monochromatic aberration through increased degrees of freedom for bending the light.

In some embodiments, the rPVH layer is sensitive to circular polarization to filter right-handed circular polarization (RHCP) or left-handed circular polarization (LHCP).

In some embodiments, the rPVH layer and the QWP layer are applied onto a positive optical power optical lens through curved lamination.

In some embodiments, the rPVH layer and the QWP layer are applied onto a negative optical power optical lens through curved lamination.

In some embodiments, the rPVH layer comprises liquid crystals (LCs) aligned in a helical twist with a helix axis vertical to a substrate.

In some embodiments, the one or more optical elements of the optical assembly comprise at least one of an optical lens, a filter, or a diffractive optical element (DOE).

According to a further aspect, there is provided a method for assembling an augmented reality/virtual reality (AR/VR) near-eye display device, the method comprising: applying a reflective polarization volume hologram (rPVH) layer onto a quarter wave plate (QWP) layer; adjusting a curvature of the rPVH layer and the QWP layer to match a curvature of an optical element of an optical assembly of the AR/VR near-eye display device; assembling the optical assembly with the rPVH layer, the QWP layer, and one or more optical elements; and assembling the AR/VR near-eye display device combining the optical assembly with a light source and one or more additional components.

In some embodiments, the method further comprises: applying the rPVH layer and the QWP layer onto an optical element through curvature lamination.

In some embodiments, the optical element is a positive power or a negative power optical lens.

### BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed without departing from the principles described herein.
Figure 1 illustrates a block diagram of an artificial reality system environment including a near-eye display, according to an example.
Figures 2A-2C illustrate various views of a near-eye display device in the form of a head-mounted display (HMD) device, according to examples.
Figure 3 illustrates a perspective view of a near-eye display in the form of a pair of glasses, according to an example.
Figure 4A and 4B illustrate light projection in an AR/VR near-eye display device through an optical assembly, according to an example.
Figure 5 illustrates modulation transfer functions (MTFs) with and without rPVH layer in the optical assembly, according to an example.
Figure 6 illustrates an rPVH layer construction with in-plane and vertical periodicity, according to an example.
Figure 7 illustrates a flow diagram of a method for forming a near-eye display device with rPVH-QWP layers in its optical assembly, according to an example.

### DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent, however, that the present disclosure may be practiced without limitation to these specific details. In other instances, some methods and structures readily understood by one of ordinary skill in the art have not been described in detail so as not to unnecessarily obscure the present disclosure. As used herein, the terms "a" and "an" are intended to denote at least one of a particular element, the term "includes" means includes but not limited to, the term "including" means including but not limited to, and the term "based on" means based at least in part on.

Augmented and/or virtual reality (AR/VR) systems commonly utilize optical assemblies (also referred to as pancake systems or optical stacks) reflective polarizers to achieve the ability of folding optics. Reflective polarizers are typically used together with quarter wave plates (QWPs) and are not very flexible to be curve laminated (e.g., on optical lenses). Furthermore, some systems use same material for optical lenses with and without reflective polarizers with both lenses having positive optical power, which may result in in-band chromatic aberration.

Some conventional systems replace reflective polarizer - quarter wave plate combination with cholesteric liquid crystal (CLC) layer or employ chromatic aberration correction with Pancharatnam-Berry Phase (PBP) lens. Both approaches have challenges in adding thickness and/or weight to the optical assembly and performance of the optical assembly.

In some examples of the present disclosure, a reflective polarization volume hologram (rPVH) layer may be used to provide optical power and correct chromatic aberration in an optical assembly of an augmented and/or virtual reality (AR/VR) near-eye display device. The rPVH layer introduces more degrees of freedom to further improve contrast of the optical system and reduces a thickness/weight of the optical assembly. Furthermore, rPVH layer is flexible, thus, allowing curved lamination on an optical lens. Moreover, rPVH layer is sensitive to circular polarization. Thus, it can filter right-handed circular polarization (RHCP) or left-handed circular polarization (LHCP), without a need for a QWP.

While some advantages and benefits of the present disclosure are apparent, other advantages and benefits may include increased optical power, contract, reduced thickness and/or weight of an optical assembly in an AR/VR near eye display device, as well as reduced risk of curved lamination (e.g., on an optical lens).

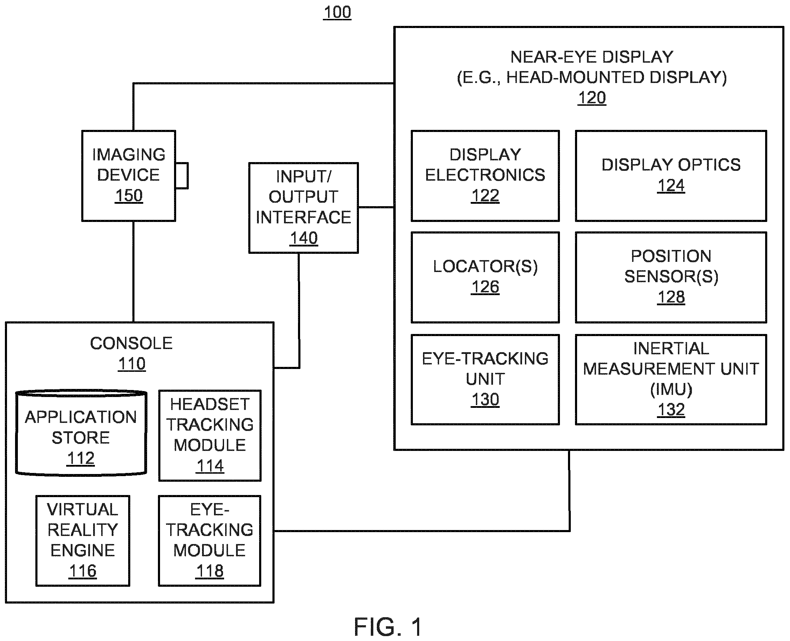

Figure 1 illustrates a block diagram of an artificial reality system environment 100 including a near-eye display, according to an example. As used herein, a "near-eye display" may refer to a device (e.g., an optical device) that may be in close proximity to a user's eye. As used herein, "artificial reality" may refer to aspects of, among other things, a "metaverse" or an environment of real and virtual elements and may include use of technologies associated with virtual reality (VR), augmented reality (AR), and/or mixed reality (MR). As used herein a "user" may refer to a user or wearer of a "near-eye display."

As shown in Figure 1, the artificial reality system environment 100 may include a near-eye display 120, an optional external imaging device 150, and an optional input/output interface 140, each of which may be coupled to a console 110. The console 110 may be optional in some instances as the functions of the console 110 may be integrated into the near-eye display 120. In some examples, the near-eye display 120 may be a head-mounted display (HMD) that presents content to a user.

In some instances, for a near-eye display system, it may generally be desirable to expand an eye box, reduce display haze, improve image quality (e.g., resolution and contrast), reduce physical size, increase power efficiency, and increase or expand field of view (FOV). As used herein, "field of view" (FOV) may refer to an angular range of an image as seen by a user, which is typically measured in degrees as observed by one eye (for a monocular head-mounted display (HMD)) or both eyes (for binocular head-mounted displays (HMDs)). Also, as used herein, an "eye box" may be a two-dimensional box that may be positioned in front of the user's eye from which a displayed image from an image source may be viewed.

In some examples, in a near-eye display system, light from a surrounding environment may traverse a "see-through" region of a waveguide display (e.g., a transparent substrate) to reach a user's eyes. For example, in a near-eye display system, light of projected images may be coupled into a transparent substrate of a waveguide, propagate within the waveguide, and be coupled or directed out of the waveguide at one or more locations to replicate exit pupils and expand the eye box.

In some examples, the near-eye display 120 may include one or more rigid bodies, which may be rigidly or non-rigidly coupled to each other. In some examples, a rigid coupling between rigid bodies may cause the coupled rigid bodies to act as a single rigid entity, while in other examples, a non-rigid coupling between rigid bodies may allow the rigid bodies to move relative to each other.

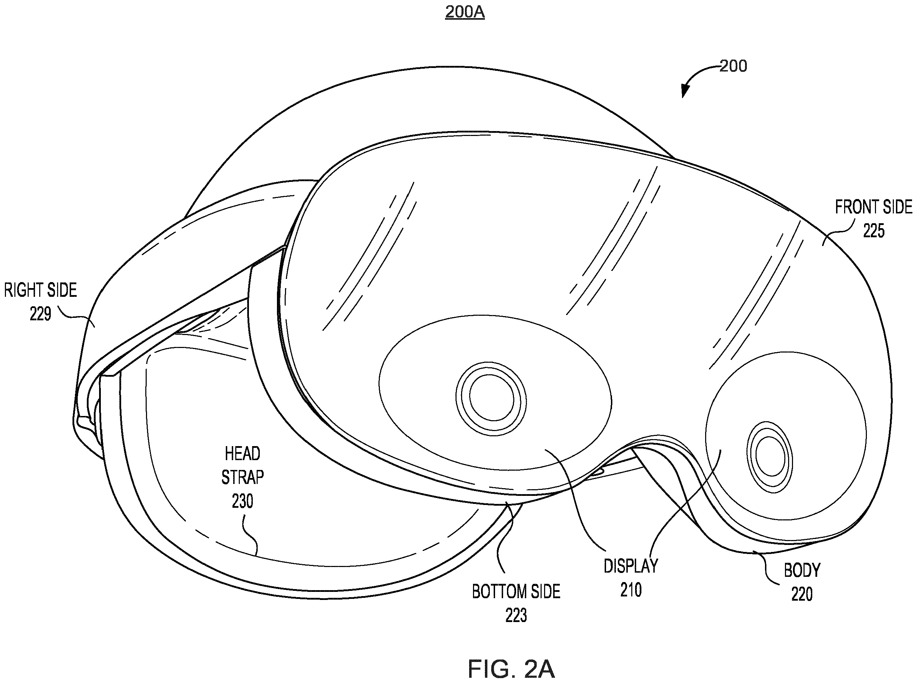

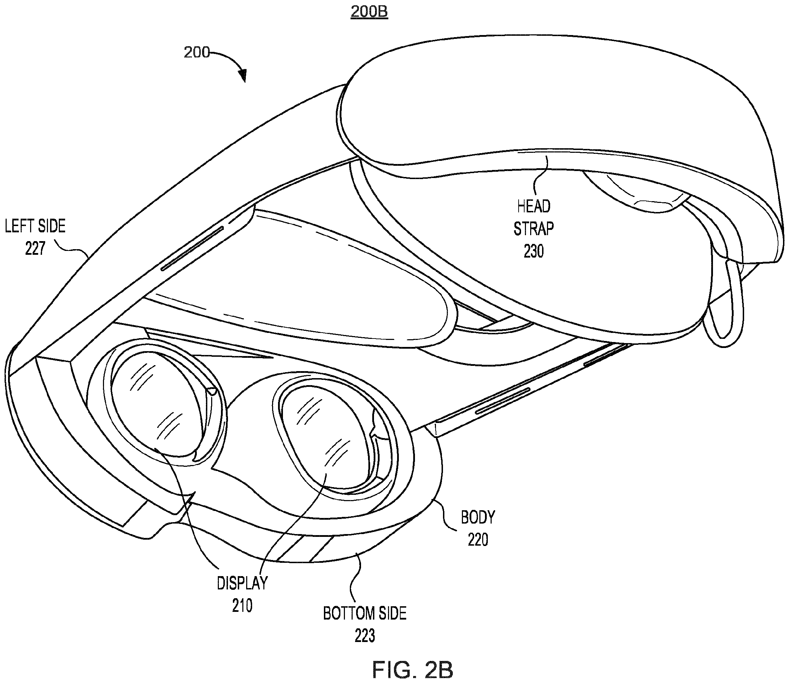

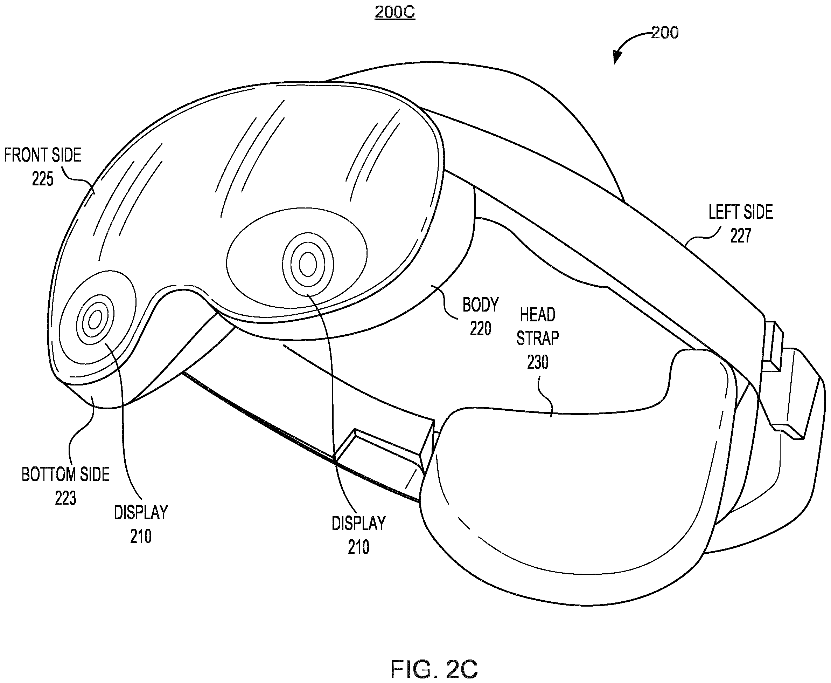

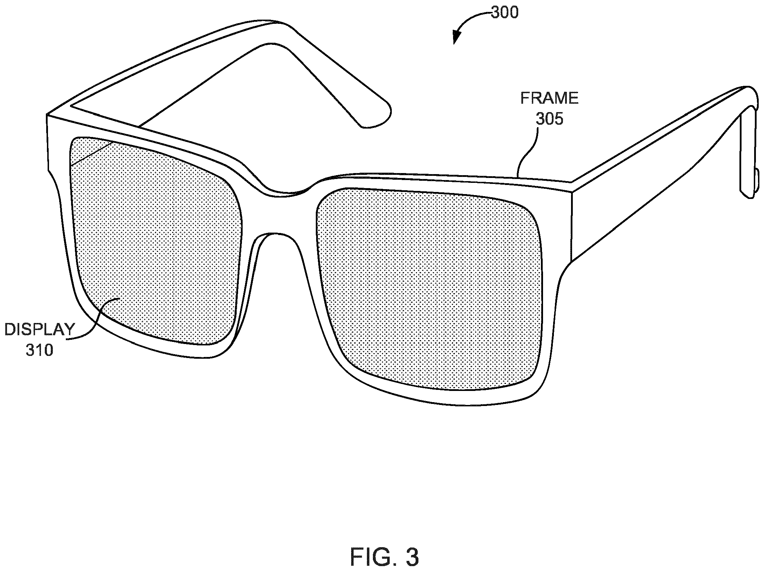

In some examples, the near-eye display 120 may be implemented in any suitable form-factor, including a head-mounted display (HMD), a pair of glasses, or other similar wearable eyewear or device. Examples of the near-eye display 120 are further described below with respect to Figures 2 and 3. Additionally, in some examples, the functionality described herein may be used in a head-mounted display (HMD) or headset that may combine images of an environment external to the near-eye display 120 and artificial reality content (e.g., computer-generated images). Therefore, in some examples, the near-eye display 120 may augment images of a physical, real-world environment external to the near-eye display 120 with generated and/or overlaid digital content (e.g., images, video, sound, etc.) to present an augmented reality to a user.

In some examples, the near-eye display 120 may include any number of display electronics 122, display optics 124, and an eye tracking unit 130. In some examples, the near-eye display 120 may also include one or more locators 126, one or more position sensors 128, and an inertial measurement unit (IMU) 132. In some examples, the near-eye display 120 may omit any of the eye tracking unit 130, the one or more locators 126, the one or more position sensors 128, and the inertial measurement unit (IMU) 132, or may include additional elements.

In some examples, the display electronics 122 may display or facilitate the display of images to the user according to data received from, for example, the optional console 110. In some examples, the display electronics 122 may include one or more display panels. In some examples, the display electronics 122 may include any number of pixels to emit light of a predominant color such as red, green, blue, white, or yellow. In some examples, the display electronics 122 may display a three-dimensional (3D) image, e.g., using stereoscopic effects produced by two-dimensional panels, to create a subjective perception of image depth.

In some examples, the near-eye display 120 may include a projector (not shown), which may form an image in angular domain for direct observation by a viewer's eye through a pupil. The projector may employ a controllable light source (e.g., a laser source) and a micro-electromechanical system (MEMS) beam scanner to create a light field from, for example, a collimated light beam. In some examples, the same projector or a different projector may be used to project a fringe pattern on the eye, which may be captured by a camera and analyzed (e.g., by the eye tracking unit 130) to determine a position of the eye (the pupil), a gaze, etc.

In some examples, the display optics 124 may display image content optically (e.g., using optical waveguides and/or couplers) or magnify image light received from the display electronics 122, correct optical errors associated with the image light, and/or present the corrected image light to a user of the near-eye display 120. In some examples, the display optics 124 may include a single optical element or any number of combinations of various optical elements as well as mechanical couplings to maintain relative spacing and orientation of the optical elements in the combination. In some examples, one or more optical elements in the display optics 124 may have an optical coating, such as an anti-reflective coating, a reflective coating, a filtering coating, and/or a combination of different optical coatings.

In some examples, the display optics 124 may also be designed to correct one or more types of optical errors, such as two-dimensional optical errors, three-dimensional optical errors, or any combination thereof. Examples of two-dimensional errors may include barrel distortion, pincushion distortion, longitudinal chromatic aberration, and/or transverse chromatic aberration. Examples of three-dimensional errors may include spherical aberration, chromatic aberration field curvature, and astigmatism.

In some examples, the one or more locators 126 may be objects located in specific positions relative to one another and relative to a reference point on the near-eye display 120. In some examples, the optional console 110 may identify the one or more locators 126 in images captured by the optional external imaging device 150 to determine the artificial reality headset's position, orientation, or both. The one or more locators 126 may each be a light-emitting diode (LED), a corner cube reflector, a reflective marker, a type of light source that contrasts with an environment in which the near-eye display 120 operates, or any combination thereof.

In some examples, the external imaging device 150 may include one or more cameras, one or more video cameras, any other device capable of capturing images including the one or more locators 126, or any combination thereof. The optional external imaging device 150 may be configured to detect light emitted or reflected from the one or more locators 126 in a field of view of the optional external imaging device 150.

In some examples, the one or more position sensors 128 may generate one or more measurement signals in response to motion of the near-eye display 120. Examples of the one or more position sensors 128 may include any number of accelerometers, gyroscopes, magnetometers, and/or other motion-detecting or error-correcting sensors, or any combination thereof.

In some examples, the inertial measurement unit (IMU) 132 may be an electronic device that generates fast calibration data based on measurement signals received from the one or more position sensors 128. The one or more position sensors 128 may be located external to the inertial measurement unit (IMU) 132, internal to the inertial measurement unit (IMU) 132, or any combination thereof. Based on the one or more measurement signals from the one or more position sensors 128, the inertial measurement unit (IMU) 132 may generate fast calibration data indicating an estimated position of the near-eye display 120 that may be relative to an initial position of the near-eye display 120. For example, the inertial measurement unit (IMU) 132 may integrate measurement signals received from accelerometers over time to estimate a velocity vector and integrate the velocity vector over time to determine an estimated position of a reference point on the near-eye display 120. Alternatively, the inertial measurement unit (IMU) 132 may provide the sampled measurement signals to the optional console 110, which may determine the fast calibration data.

The eye tracking unit 130 may include one or more eye tracking systems. As used herein, "eye tracking" may refer to determining an eye's position or relative position, including orientation, location, and/or gaze of a user's eye. In some examples, an eye tracking system may include an imaging system that captures one or more images of an eye and may optionally include a light emitter, which may generate light (e.g., a fringe pattern) that is directed to an eye such that light reflected by the eye may be captured by the imaging system (e.g., a camera). In other examples, the eye tracking unit 130 may capture reflected radio waves emitted by a miniature radar unit. These data associated with the eye may be used to determine or predict eye position, orientation, movement, location, and/or gaze.

In some examples, the near-eye display 120 may use the orientation of the eye to introduce depth cues (e.g., blur image outside of the user's main line of sight), collect heuristics on the user interaction in the virtual reality (VR) media (e.g., time spent on any particular subject, object, or frame as a function of exposed stimuli), some other functions that are based in part on the orientation of at least one of the user's eyes, or any combination thereof. In some examples, because the orientation may be determined for both eyes of the user, the eye tracking unit 130 may be able to determine where the user is looking or predict any user patterns, etc.

In some examples, the input/output interface 140 may be a device that allows a user to send action requests to the optional console 110. As used herein, an "action request" may be a request to perform a particular action. For example, an action request may be to start or to end an application or to perform a particular action within the application. The input/output interface 140 may include one or more input devices. Example input devices may include a keyboard, a mouse, a game controller, a glove, a button, a touch screen, or any other suitable device for receiving action requests and communicating the received action requests to the optional console 110. In some examples, an action request received by the input/output interface 140 may be communicated to the optional console 110, which may perform an action corresponding to the requested action.

In some examples, the optional console 110 may provide content to the near-eye display 120 for presentation to the user in accordance with information received from one or more of external imaging device 150, the near-eye display 120, and the input/output interface 140. For example, in the example shown in Figure 1, the optional console 110 may include an application store 112, a headset tracking module 114, a virtual reality engine 116, and an eye tracking module 118. Some examples of the optional console 110 may include different or additional modules than those described in conjunction with Figure 1. Functions further described below may be distributed among components of the optional console 110 in a different manner than is described here.

In some examples, the optional console 110 may include a processor and a non-transitory computer-readable storage medium storing instructions executable by the processor. The processor may include multiple processing units executing instructions in parallel. The non-transitory computer-readable storage medium may be any memory, such as a hard disk drive, a removable memory, or a solid-state drive (e.g., flash memory or dynamic random access memory (DRAM)). In some examples, the modules of the optional console 110 described in conjunction with Figure 1 may be encoded as instructions in the non-transitory computer-readable storage medium that, when executed by the processor, cause the processor to perform the functions further described below. It should be appreciated that the optional console 110 may or may not be needed or the optional console 110 may be integrated with or separate from the near-eye display 120.

In some examples, the application store 112 may store one or more applications for execution by the optional console 110. An application may include a group of instructions that, when executed by a processor, generates content for presentation to the user. Examples of the applications may include gaming applications, conferencing applications, video playback application, or other suitable applications.

In some examples, the headset tracking module 114 may track movements of the near-eye display 120 using slow calibration information from the external imaging device 150. For example, the headset tracking module 114 may determine positions of a reference point of the near-eye display 120 using observed locators from the slow calibration information and a model of the near-eye display 120. Additionally, in some examples, the headset tracking module 114 may use portions of the fast calibration information, the slow calibration information, or any combination thereof, to predict a future location of the near-eye display 120. In some examples, the headset tracking module 114 may provide the estimated or predicted future position of the near-eye display 120 to the virtual reality engine 116.

In some examples, the virtual reality engine 116 may execute applications within the artificial reality system environment 100 and receive position information of the near-eye display 120, acceleration information of the near-eye display 120, velocity information of the near-eye display 120, predicted future positions of the near-eye display 120, or any combination thereof from the headset tracking module 114. In some examples, the virtual reality engine 116 may also receive estimated eye position and orientation information from the eye tracking module 118. Based on the received information, the virtual reality engine 116 may determine content to provide to the near-eye display 120 for presentation to the user.

In some examples, a location of a projector of a display system may be adjusted to enable any number of design modifications. For example, in some instances, a projector may be located in front of a viewer's eye (i.e., "front-mounted" placement). In a front-mounted placement, in some examples, a projector of a display system may be located away from a user's eyes (i.e., "world-side"). In some examples, a head-mounted display (HMD) device may utilize a front-mounted placement to propagate light towards a user's eye(s) to project an image.

As mentioned herein, a reflective polarization volume hologram (rPVH) layer in combination with a quarter wave plate (QWP) may be used to provide optical power and correct chromatic aberration in an optical assembly of an augmented and/or virtual reality (AR/VR) near-eye display device. The rPVH layer may introduce more degrees of freedom to further improve contrast of the optical system and reduce a thickness/weight of the optical assembly.

Figures 2A-2C illustrate various views of a near-eye display device in the form of a head-mounted display (HMD) device 200, according to examples. In some examples, the head-mounted device (HMD) device 200 may be a part of a virtual reality (VR) system, an augmented reality (AR) system, a mixed reality (MR) system, another system that uses displays or wearables, or any combination thereof. As shown in diagram 200A of Figure 2A, the head-mounted display (HMD) device 200 may include a body 220 and a head strap 230. The front perspective view of the head-mounted display (HMD) device 200 further shows a bottom side 223, a front side 225, a left side 227 and a right side 229 of the body 220. In some examples, the head strap 230 may have an adjustable or extendible length. In particular, in some examples, there may be a sufficient space between the body 220 and the head strap 230 of the head-mounted display (HMD) device 200 for allowing a user to mount the head-mounted display (HMD) device 200 onto the user's head. For example, the length of the head strap 230 may be adjustable to accommodate a range of user head sizes. In some examples, the head-mounted display (HMD) device 200 may include additional, fewer, and/or different components such as a display 210 to present a wearer augmented reality/virtual reality (AR/VR) content and a camera to capture images or videos of the wearer's environment.

As shown in the bottom perspective view of diagram 200B of Figure 2B, the display 210 may include one or more display assemblies and present, to a user (wearer), media or other digital content including virtual and/or augmented views of a physical, real-world environment with computer-generated elements. Examples of the media or digital content presented by the head-mounted display (HMD) device 200 may include images (e.g., two-dimensional (2D) or three-dimensional (3D) images), videos (e.g., 2D or 3D videos), audio, or any combination thereof. In some examples, the user may interact with the presented images or videos through eye tracking sensors enclosed in the body 220 of the head-mounted display (HMD) device 200. The eye tracking sensors may also be used to adjust and improve quality of the presented content.

In some examples, the head-mounted display (HMD) device 200 may include various sensors (not shown), such as depth sensors, motion sensors, position sensors, and/or eye tracking sensors. Some of these sensors may use any number of structured or unstructured light patterns for sensing purposes. In some examples, the head-mounted display (HMD) device 200 may include an input/output interface for communicating with a console communicatively coupled to the head-mounted display (HMD) device 200 through wired or wireless means. In some examples, the head-mounted display (HMD) device 200 may include a virtual reality engine (not shown) that may execute applications within the head-mounted display (HMD) device 200 and receive depth information, position information, acceleration information, velocity information, predicted future positions, or any combination thereof of the head-mounted display (HMD) device 200 from the various sensors.

In some examples, the information received by the virtual reality engine may be used for producing a signal (e.g., display instructions) to the display 210. In some examples, the head-mounted display (HMD) device 200 may include locators (not shown), which may be located in fixed positions on the body 220 of the head-mounted display (HMD) device 200 relative to one another and relative to a reference point. Each of the locators may emit light that is detectable by an external imaging device. This may be useful for the purposes of head tracking or other movement/orientation. It should be appreciated that other elements or components may also be used in addition or in lieu of such locators.

It should be appreciated that in some examples, a projector mounted in a display system may be placed near and/or closer to a user's eye (i.e., "eye-side"). In some examples, and as discussed herein, a projector for a display system shaped like eyeglasses may be mounted or positioned in a temple arm (i.e., a top far corner of a lens side) of the eyeglasses. It should be appreciated that, in some instances, utilizing a back-mounted projector placement may help to reduce size or bulkiness of any required housing required for a display system, which may also result in a significant improvement in user experience for a user.

In some examples, the display sub-system of the near-eye display device may include an optical assembly with a reflective polarization volume hologram (rPVH) layer and/or a quarter wave plate (QWP) to provide optical power and correct chromatic aberration.

Figure 3 is a perspective view of a near-eye display 300 in the form of a pair of glasses (or other similar eyewear), according to an example. In some examples, the near-eye display 300 may be a specific example of near-eye display 120 of Figure 1 and may be configured to operate as a virtual reality display, an augmented reality (AR) display, and/or a mixed reality (MR) display.

In some examples, the near-eye display 300 may include a frame 305 and a display 310. In some examples, the display 310 may be configured to present media or other content to a user. In some examples, the display 310 may include display electronics and/or display optics, similar to components described with respect to Figures 1 and 2A-2C. For example, as described above with respect to the near-eye display 120 of Figure 1, the display 310 may include a liquid crystal display (LCD) display panel, a light-emitting diode (LED) display panel, or an optical display panel (e.g., a waveguide display assembly). In some examples, the display 310 may also include any number of optical components, such as waveguides, gratings, lenses, mirrors, etc. In other examples, the display 310 may include a projector, or in place of the display 310 the near-eye display 300 may include a projector.

In some examples, the near-eye display 300 may further include various sensors on or within a frame 305. In some examples, the various sensors may include any number of depth sensors, motion sensors, position sensors, inertial sensors, and/or ambient light sensors, as shown. In some examples, the various sensors may include any number of image sensors configured to generate image data representing different fields of views in one or more different directions. In some examples, the various sensors may be used as input devices to control or influence the displayed content of the near-eye display, and/or to provide an interactive virtual reality (VR), augmented reality (AR), and/or mixed reality (MR) experience to a user of the near-eye display 300. In some examples, the various sensors may also be used for stereoscopic imaging or other similar applications.

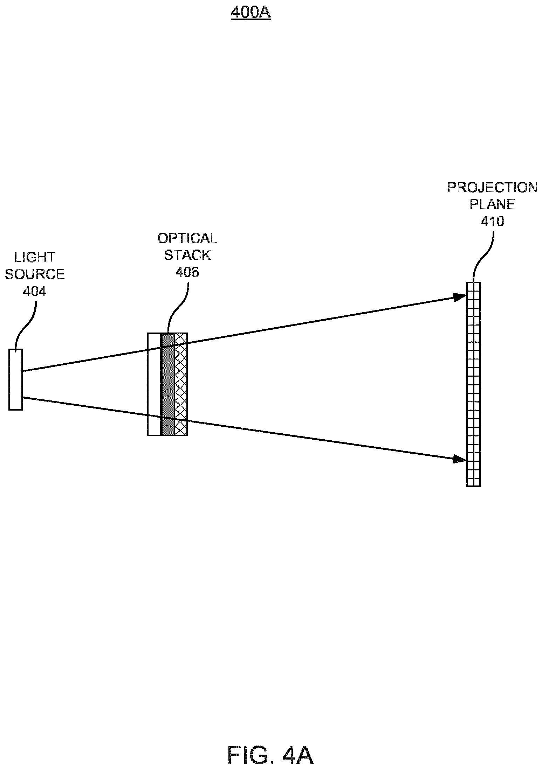

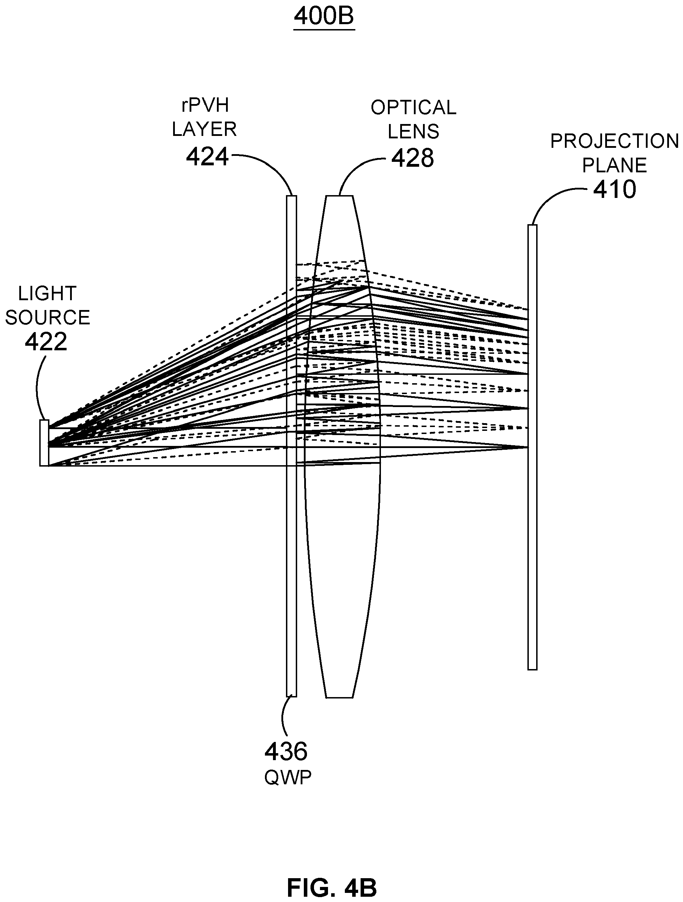

Figure 4A and 4B illustrate light projection in an AR/VR near-eye display device through an optical assembly, according to an example. Diagram 400A shows a light projection portion of an eye tracking system, which may include a light source 404, an optical assembly (optical stack) 406 and light arriving at a projection plane 410 upon transmission by the light source 404 and processing by the optical assembly 406. The optical assembly 406 may include elements to focus or defocus the incoming light, to filter the light, to correct aberrations or other optical problems such that a high-quality projection can be provided to the projection plane 410.

Diagram 400B shows an example detail configuration of the optical assembly 406 with rPVH layer 424, QWP 436, and optical lens 428, which provide light from the light source 422 onto projection plane 410. The optical assembly 406 with the rPVH layer 424, the QWP 436, and the optical lens 428 provide optical power and correct chromatic aberration without introducing negative optical power. The rPVH layer 424 introduces more degrees of freedom to further improve contrast of the optical system and reduces a thickness/weight of the optical assembly 406. Because rPVH introduces more degrees of freedom for bending the light (compared to RP+QWP, for example), it corrects monochromatic aberration. Furthermore, the rPVH layer 424 and the QWP 436 are flexible, thus, allowing curved lamination on the optical lens 428. Moreover, the rPVH layer 424 is sensitive to circular polarization and can filter right-handed circular polarization (RHCP) or left-handed circular polarization (LHCP). The light source 422 may be any light coherent and incoherent source, such as a VCSEL or an LED, or a plurality of light sources such as a VCSEL array, a micro-LED array, etc. In some examples, the optical assembly may include other elements such as filters, diffractive optical elements (DOEs), and similar ones. In some examples, by moving the flat plate (needed for RP+QWP systems), a system may introduce accommodation capabilities.

In an augmented reality/virtual reality (AR/VR) system, a pancake system (optical assembly) target for retina level resolution needs in-band chromatic aberration correction and good modulation transfer function (MTF). The MTF of a lens or any optical system is a measurement of its ability to transfer contrast at a particular resolution from the object to the image. Thus, the MTF is a way to incorporate resolution and contrast into a single specification. Resolution is an imaging system's ability to distinguish object detail. Contrast (also referred to as modulation) can be defined as how faithfully the minimum and maximum intensity values are transferred from an object plane to an image plane.

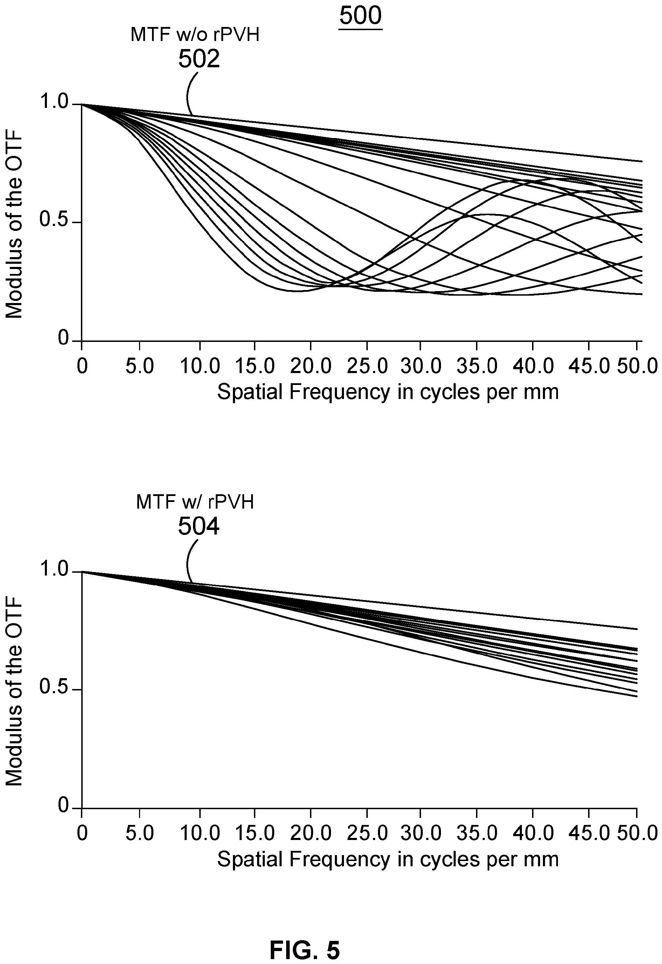

Figure 5 illustrates modulation transfer functions (MTFs) with and without rPVH layer in the optical assembly, according to an example.

Diagram 500 shows modulation transfer function (MTF) 502 of an optical assembly without rPVH. The MTF is shown across spatial frequency (cycles per mm) and modulus of the optical transfer function (OTF) axes in a 510 - 550 nm wavelength range. Diagram 500 further shows modulation transfer function (MTF) 504 of the same optical assembly with rPVH across the spatial frequency (cycles per mm) and the modulus of the optical transfer function (OTF) axes in the 510 - 550 nm wavelength range. As the comparison of the two plots shows, the MTF is improved substantially in the optical assembly configuration with rPVH.

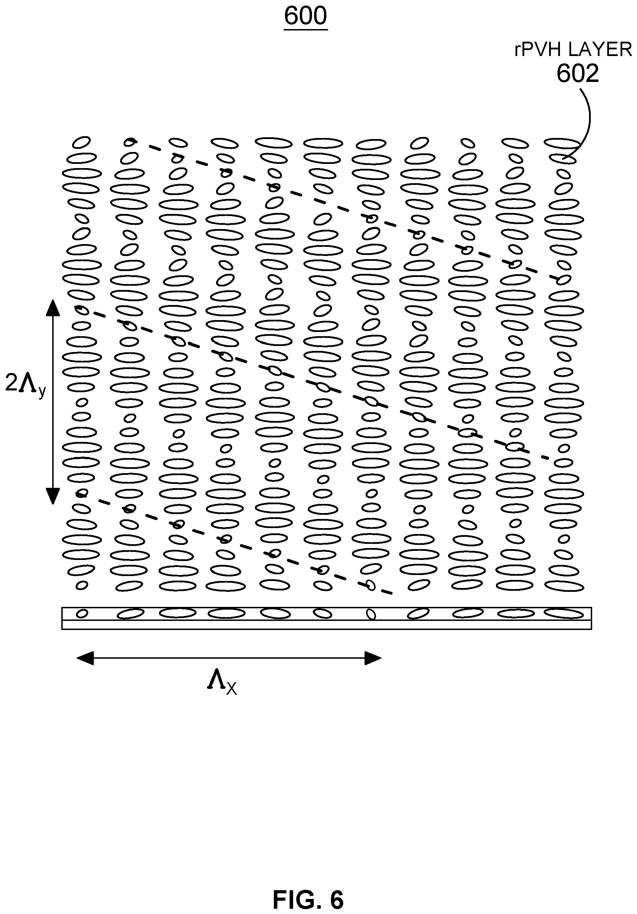

Figure 6 illustrates an rPVH layer construction with in-plane and vertical periodicity, according to an example.

Diagram 600 shows an example internal construction of rPVH layer 602, where liquid crystals (LCs) are aligned in a helical twist with helix axis vertical to the substrate. In-plane periodicity is denoted as Λx, and vertical periodicity is denoted as Λy with a helical pitch P = 2Λy. The rPVH layer in its essence resembles a slanted multi-layer structure for circularly polarized light with the same handedness as the helical twist. Due to the inherent high index contrast (>0.15), the rPVH layer provides high efficiency with large reflection bandwidth. A thickness of rPVH layer is directly related to the efficiency.

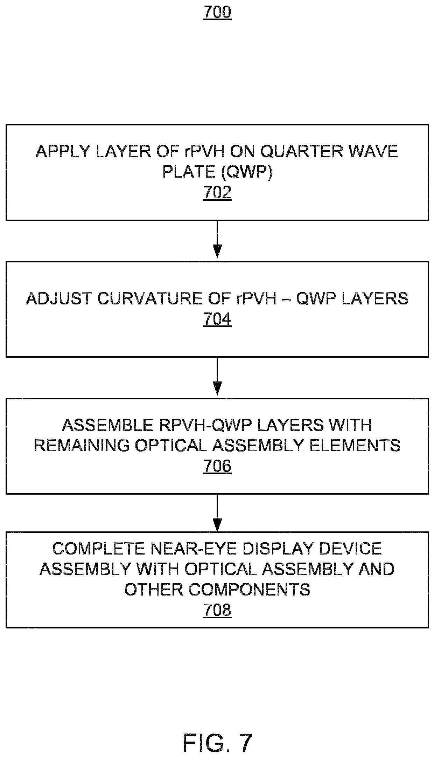

Figure 7 illustrates a flow diagram of a method for fabricating a near-eye display device with rPVH-QWP layers in its optical assembly, according to an example. The method 700 is provided by way of example, as there may be a variety of ways to carry out the method described herein. The method 700 may be executed or otherwise performed by one or more processing components of a system or a combination of systems to implement other models. Each block shown in Figure 7 may further represent one or more processes, methods, or subroutines, and one or more of the blocks may include machine readable instructions stored on a non-transitory computer readable medium and executed by a processor or other type of processing circuit to perform one or more operations described herein.

At block 702, an rPVH layer may be applied onto a QWP layer, although in some examples, the rPVH layer may be used without a QWP layer. As both layers are flexible, the combination (or the rPVH layer alone) may be applied directly onto a curved surface.

At block 704, a curvature of the rPVH-QWP layers may be adjusted to match that of the substrate they will be applied to such as an optical lens. At block 706, the optical assembly may be put together with additional elements such as one or more optical lenses, filters, diffractive optical elements (DOEs), etc. Subsequently, at block 708, a near-eye display device for AR/VR display may be assembled using the optical assembly and other components such as a frame and the display(s), light source(s), power module(s), processor(s), transceiver(s), etc.

According to examples, a method of making an AR/VR display device with an optical assembly containing rPVH and QWP layers is described herein. A system of making the AR/VR display device is also described herein. A non-transitory computer-readable storage medium may have an executable stored thereon, which when executed instructs a processor to perform the methods described herein.

In the foregoing description, various examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

Although the methods and systems as described herein may be directed mainly to digital content, such as videos or interactive media, it should be appreciated that the methods and systems as described herein may be used for other types of content or scenarios as well. Other applications or uses of the methods and systems as described herein may also include social networking, marketing, content-based recommendation engines, and/or other types of knowledge or data-driven systems.

## Claims

1. An optical assembly for an augmented reality/virtual reality, AR/VR, display system, the optical assembly comprising:
a reflective polarization volume hologram, rPVH, layer;
a quarter wave plate, QWP, layer; and
one or more optical elements, wherein the rPVH layer and the QWP layer are flexible and applied onto one of the one or more optical elements to provide optical power and to correct aberration in the optical assembly.

2. The optical assembly of claim 1, wherein the rPVH layer and the QWP layer are to correct chromatic aberration without introducing negative optical power.

3. The optical assembly of claim 1 or claim 2, wherein the rPVH layer introduces more degrees of freedom for bending the light compared to a reflective polarizer and QWP combination to correct monochromatic aberration; and/or preferably
wherein the rPVH layer is sensitive to circular polarization to filter right-handed circular polarization, RHCP, or left-handed circular polarization, LHCP.

4. The optical assembly of any preceding claim, wherein the rPVH layer and the QWP layer are applied onto a positive optical power optical lens or a negative optical power optical lens through curved lamination.

5. The optical assembly of any preceding claim, wherein the rPVH layer comprises liquid crystals, LCs, aligned in a helical twist with a helix axis vertical to a substrate; and preferably
wherein an in-plane periodicity of the rPVH layer is denoted as Λx, and a vertical periodicity of the rPVH layer is denoted as Λy with a helical pitch of the rPVH layer being P = 2Λy.

6. The optical assembly of any preceding claim, wherein the one or more optical elements of the optical assembly comprise at least one of an optical lens, a filter, or a diffractive optical element (DOE).

7. An augmented reality/virtual reality, AR/VR, near-eye display device comprising:
a light source;
an optical assembly comprising:
a reflective polarization volume hologram, rPVH, layer;
a quarter wave plate, QWP, layer; and
one or more optical elements, wherein the rPVH layer and the QWP layer are flexible and applied onto one of the one or more optical elements to provide optical power and to correct aberration in the optical assembly; and
a display to project light into an eyebox.

8. The AR/VR near-eye display device of claim 7, wherein the light source comprises a coherent light source or an incoherent light source.

9. The AR/VR near-eye display device of claim 7 or claim 8, wherein the rPVH layer and the QWP layer are:
to correct chromatic aberration without introducing negative optical power; and
to correct monochromatic aberration through increased degrees of freedom for bending the light.

10. The AR/VR near-eye display device of any one of claims 7 to 9, wherein the rPVH layer is sensitive to circular polarization to filter right-handed circular polarization, RHCP, or left-handed circular polarization, LHCP.

11. The AR/VR near-eye display device of any one of claims 7 to 10, wherein the rPVH layer and the QWP layer are applied onto a positive optical power optical lens or a negative optical power optical lens through curved lamination.

12. The AR/VR near-eye display device of any one of claims 7 to 11, wherein the rPVH layer comprises liquid crystals, LCs, aligned in a helical twist with a helix axis vertical to a substrate.

13. The AR/VR near-eye display device of any one of claims 7 to 12, wherein the one or more optical elements of the optical assembly comprise at least one of an optical lens, a filter, or a diffractive optical element, DOE.

14. A method for assembling an augmented reality/virtual reality, AR/VR, near-eye display device, the method comprising:
applying a reflective polarization volume hologram, rPVH, layer onto a quarter wave plate, QWP, layer;
adjusting a curvature of the rPVH layer and the QWP layer to match a curvature of an optical element of an optical assembly of the AR/VR near-eye display device;
assembling the optical assembly with the rPVH layer, the QWP layer, and one or more optical elements; and
assembling the AR/VR near-eye display device combining the optical assembly with a light source and one or more additional components.

15. The method of claim 14, further comprising:
applying the rPVH layer and the QWP layer onto an optical element through curvature lamination; preferably
wherein the optical element is a positive power or a negative power optical lens.
